(19) Europäisches Patentamt
European Patent Office
Office européen des brevets

(11) **EP 3 221 494 B1**

(12) **FASCICULE DE BREVET EUROPEEN**

(45) Date de publication et mention
de la délivrance du brevet:
**12.06.2019   Bulletin 2019/24**

(21) Numéro de dépôt: **15790585.2**

(22) Date de dépôt: **06.11.2015**

(51) Int Cl.:
*C25B 15/02* [(2006.01)]     *C25B 1/08* [(2006.01)]
*H01M 8/04858* [(2016.01)]     *H01M 8/0438* [(2016.01)]
*H01M 8/04537* [(2016.01)]     *H01M 8/04746* [(2016.01)]
*H01M 8/124* [(2016.01)]     *H01M 8/04* [(2016.01)]

(86) Numéro de dépôt international:
**PCT/EP2015/075923**

(87) Numéro de publication internationale:
**WO 2016/078936 (26.05.2016 Gazette 2016/21)**

(54) **ELECTROLYSEUR ET PILE A COMBUSTIBLE A PILOTAGE POTENTIOSTATIQUE ET PILOTAGE A TAUX DE CONVERSION CONSTANT**

ELEKTROLYSATOR UND BRENNSTOFFZELLE MIT POTENTIOSTATISCHER STEUERUNG UND STEUERUNG BEI EINER KONSTANTEN UMWANDLUNGSRATE

ELECTROLYSER AND FUEL CELL WITH POTENTIOSTATIC CONTROL AND CONTROL AT A CONSTANT CONVERSION RATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.11.2014   FR 1461293**

(43) Date de publication de la demande:
**27.09.2017   Bulletin 2017/39**

(73) Titulaire: **Commissariat à l'Énergie Atomique et aux Énergies Alternatives**
**75015 Paris (FR)**

(72) Inventeurs:
• **CHATROUX, André**
**38210 Tullins (FR)**

• **COUTURIER, Karine**
**38360 Sassenage (FR)**
• **DE SAINT JEAN, Myriam**
**38000 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-2011/023865     WO-A1-2014/114348**
**FR-A1- 2 983 493     US-A1- 2005 048 334**
**US-A1- 2009 263 681**

**Description**

**DOMAINE DE L'INVENTION**

L'invention concerne les dispositifs électrochimiques à haute température, tels que les piles à combustible et les électrolyseurs à oxydes solides, et plus particulièrement le pilotage de tels dispositifs dans le but d'optimiser leur rendement énergétique.

**ETAT DE LA TECHNIQUE**

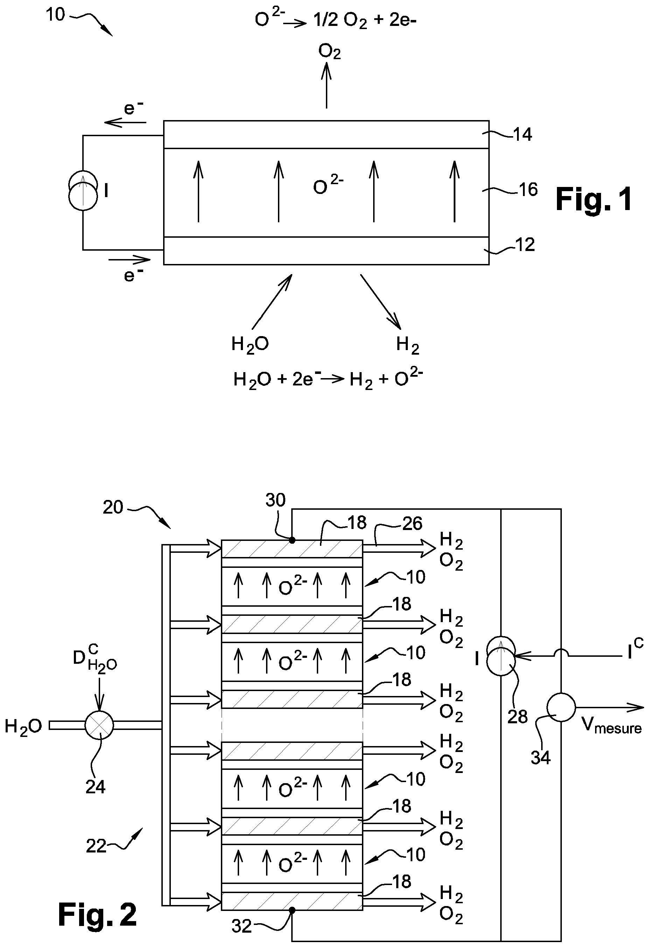

Comme cela est connu en soi, un électrolyseur de vapeur d'eau ($H_2O$) à haute température, ou électrolyseur EVHT (pour « électrolyse de la vapeur d'eau à haute température »), comprend un empilement de plusieurs cellules électrochimiques élémentaires à oxyde solide. En se référant à la figure 1, une cellule à oxyde solide **10,** ou « SOEC » (acronyme anglo-saxon «*Solid Oxide Electrolyzer Cell*») comprend notamment :

a) une première électrode conductrice poreuse **12,** ou « cathode », destinée à être alimentée en vapeur d'eau pour la production de dihydrogène,
b) une seconde électrode conductrice poreuse **14,** ou « anode », par laquelle s'échappe le dioxygène ($O_2$) produit par l'électrolyse de l'eau injectée sur la cathode, et
c) une membrane à oxyde solide (électrolyte dense) **16** prise en sandwich entre la cathode **12** et l'anode **14,** la membrane **16** étant conductrice anionique pour de hautes températures, usuellement des températures supérieures à 600°C.

En chauffant la cellule **10** au moins à cette température et en injectant un courant électrique *I* entre la cathode **12** et l'anode **14,** il se produit alors une réduction de l'eau sur la cathode **12,** ce qui génère du dihydrogène ($H_2$) au niveau de la cathode **12** et du dioxygène au niveau de l'anode **14.**
Un empilement **20** de telles cellules, ayant pour but de produire une quantité importante d'hydrogène, est illustré par la vue schématique de la figure 2. Notamment, les cellules **10** sont empilées les unes sur les autres en étant séparées par des plaques d'interconnection **18.** Ces plaques ont pour fonction à la fois d'assurer la continuité électrique entre les différentes électrodes des cellules **10,** permettant ainsi une mise en série électrique de celles-ci, et de distribuer les différents gaz nécessaires au fonctionnement des cellules, ainsi que le cas échéant un gaz porteur pour aider à l'évacuation des produits de l'électrolyse. Pour ce faire, les plaques **18** sont connectées à une alimentation **22** en vapeur d'eau pour l'injection de cette vapeur sur les cathodes des cellules **10** conformément à un débit de vapeur d'eau $D_{H_2O}$ constant réglé par une vanne pilotable **24.** Les plaques **18** sont également connectées à un collecteur de gaz **26** pour la collecte des gaz issus de l'électrolyse. Un exemple d'empilement et de structure de plaque d'interconnexion sont par exemple décrits dans le document WO 2011/110676.
Pour la mise en oeuvre effective de l'électrolyse par l'empilement **20,** l'empilement est porté à une température supérieure à 600°C, usuellement une température comprise entre 700°C et 900°C, l'alimentation en gaz est mise en marche à débit constant et une source d'alimentation électrique **28** est branchée entre deux bornes **30, 32** de l'empilement **20** afin d'y faire circuler un courant *I*.
On distingue dans l'état de la technique deux types de pilotage d'un empilement EVHT : le pilotage en mode galvanostatique et le pilotage en mode potentiostatique. Dans le premier, l'intensité du courant *I* injecté dans l'empilement est conservée constante, l'alimentation électrique **28** étant par exemple une source de courant constant, ce qui permet de maintenir le taux de conversion de la vapeur d'eau en hydrogène constant. Dans le second, c'est la tension entre les bornes **30, 32** de l'empilement qui est conservée constante, l'alimentation **28** étant par exemple une source de tension constante, ce qui permet de maintenir constant le régime thermique de l'empilement **20.** On note ainsi que dans l'état de la technique, il n'est pas possible d'avoir à la fois un taux de conversion constant et un régime thermique constant.
En outre, seulement après quelques centaines d'heures de fonctionnement, des phénomènes de dégradation apparaissent dans l'empilement.
Dans le pilotage en mode galvanostatique, ces phénomènes se manifestent sous la forme d'une augmentation de la tension, et donc d'une augmentation de la résistance de l'électrolyseur. L'augmentation de la résistance de l'électrolyseur diminue son rendement énergétique. Ce dernier produit donc toujours la même quantité d'hydrogène, mais fonctionne avec un rendement inférieur. De plus, cela conduit à un changement de régime thermique de l'électrolyseur difficile à gérer, particulièrement lorsque le régime thermique devient très exothermique. Dans le pilotage en mode potentiostatique, les phénomènes de dégradation se manifestent par une baisse de l'intensité de courant électrique injecté dans l'empilement, ce qui conduit à une diminution du taux de conversion de la vapeur d'eau en hydrogène et du rendement énergétique à débit d'entrée constant.
En d'autres termes, il n'existe pas dans l'état de la technique, de pilotage d'un électrolyseur qui permette un contrôle efficace du point de fonctionnement de ce dernier en termes de taux de conversion et de régime thermique.

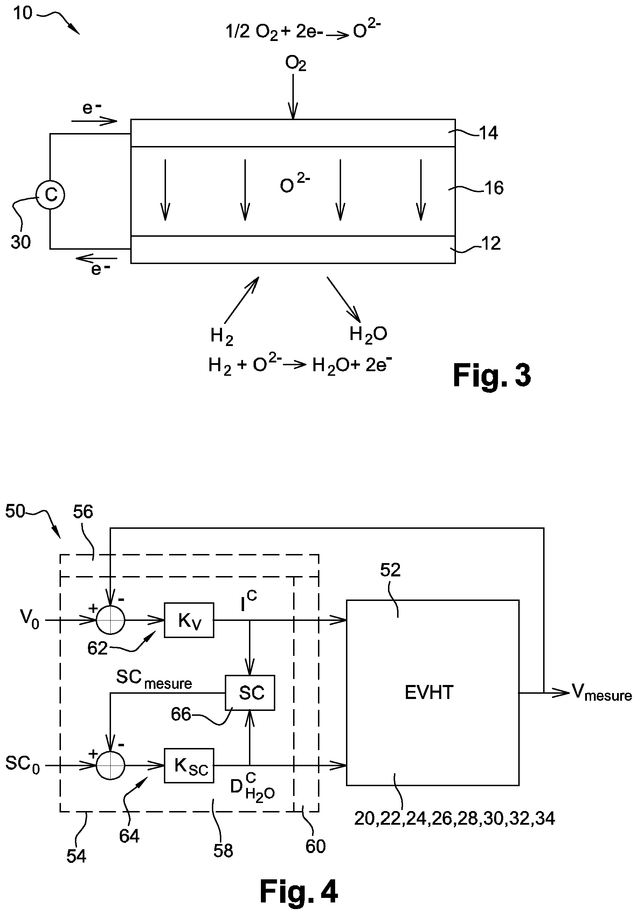

Une pile à oxyde solide à haute température, plus connue sous le nom de pile SOFC (pour *« solid oxide fuel cell »*) connait des problèmes similaires. En effet, un électrolyseur EVHT et une pile SOFC sont des structures identiques, seul leur mode de fonctionnement étant différent. En se référant à la figure 3, une cellule électrochimique constitutive d'une pile SOFC comprend les mêmes éléments (anode **12,** cathode **14,** électrolyte **16**) qu'une cellule d'électrolyseur, la cellule de la pile étant cependant alimentée, avec des débits constants, sur son anode par du dihydrogène et sur sa cathode par du dioxygène, et connectée à une charge C pour délivrer le courant électrique produit. Contrairement à un électrolyseur, dont le point de fonctionnement est défini par le régime thermique et le taux de conversion de la vapeur d'eau, le point de fonctionnement de la pile est défini par le régime thermique et le taux d'utilisation de l'hydrogène, c'est-à-dire la part d'hydrogène effectivement oxydée pour produire de l'électricité. De manière similaire à l'électrolyseur, une pile est pilotée, soit selon un mode galvanostatique, imposant que la pile débite un courant constant, soit selon un mode potentiostatique, imposant que la pile délivre une tension électrique constante. On constate ainsi le même problème de contrôle du point de fonctionnement de la pile que dans un électrolyseur.

Le document US 2005/0048334 propose un système permettant de contrôler la température d'une pile à combustible réversible de type SOFC en ajustant la densité de courant ou le débit de réactifs.

## EXPOSE DE L'INVENTION

Le but de la présente invention est de proposer un pilotage d'un dispositif électrochimique, électrolyseur EVHT ou pile SOFC, permettant de commander de manière efficace le point de fonctionnement du dispositif.

A cet effet l'invention a pour objet un système électrochimique comportant :

- un dispositif formant électrolyseur de vapeur d'eau à haute température ou pile à combustible à haute température, le dispositif comprenant un empilement de cellules électrochimiques élémentaires comprenant chacune deux électrodes, et un électrolyte intercalé entre les deux électrodes, lesdites cellules étant connectées électriquement en série et l'empilement comprenant deux bornes électriques la génération d'un courant électrique I dans l'empilement traversant lesdites cellules (e.g. pour l'alimentation en courant desdites cellules dans le cadre d'un électrolyseur) ;
- une alimentation en gaz apte à alimenter selon un débit de gaz $D_G$:

    - les électrodes de l'empilement formant cathodes en vapeur d'eau si le dispositif est un électrolyseur à haute température ; ou
    - les électrodes de l'empilement formant anodes en dihydrogène si le dispositif est une pile à combustible à haute température ;

- et un circuit électrique connecté aux bornes électriques de l'empilement pour contrôler le courant électrique *I* dans l'empilement.

Selon l'invention, le système électrochimique comporte en outre :

- un module de mesure d'une tension électrique $V_{mesurée}$ entre les bornes de l'empilement; et
- un premier régulateur pour piloter le courant électrique *I* de manière à réguler la tension mesurée sur une consigne de tension prédéterminée $V_0$,
- un module de mesure d'un taux $\tau_{mesuré}$, ledit taux $\tau_{mesuré}$ étant :

    - un taux de conversion de la vapeur d'eau en hydrogène si le dispositif est un électrolyseur à haute température ; ou
    - un taux d'utilisation du dihydrogène si le dispositif est une pile à combustible à haute température ;

- un deuxième régulateur pour piloter le débit de gaz $D_G$ de l'alimentation en gaz de manière à réguler le taux mesuré $\tau_{mesuré}$ sur une consigne prédéterminée de taux $\tau_0$.

Les termes régulation et de régulateur renvoient à la notion classique de l'automatique, ce type de commande visant à stabiliser une grandeur sur une consigne pour celle-ci, c'est-à-dire minimiser la différence entre la grandeur et sa consigne, et préférentiellement annuler cette différence. Par ailleurs, au sens de l'invention, le terme de « mesure » renvoie à toute méthode permettant d'acquérir ou d'estimer une grandeur. Ce terme peut donc ainsi correspondre à une réelle mesure d'une grandeur ou bien à un calcul de ladite grandeur à partir d'une autre grandeur.

En d'autres termes, l'invention propose de combiner les régulations de la tension en fonction du courant et du taux (de conversion de la vapeur d'eau pour un électrolyseur et d'utilisation de l'hydrogène pour une pile), en fonction du débit de gaz injecté (H$_2$O pour l'électrolyseur et H$_2$ pour la pile). Ces régulations combinées permettent à la fois de garder la tension sensiblement constante, et donc également le régime thermique, et de garder le taux sensiblement constant, et donc également le rendement constant.

Selon un mode de réalisation, le pilotage du courant électrique *I* est mis en oeuvre à une première fréquence prédéterminée $f_1 = \frac{1}{T_1}$, où $T_1$ est la durée mise par le dispositif pour atteindre X$_1$% d'un régime stationnaire suite à une perturbation du courant électrique *I* dans l'empilement, X$_1$ étant supérieur ou égal à 80. Notamment, X$_1$ est inférieur ou égal à 90.

Selon un mode de réalisation, le pilotage du débit de gaz *Dg* (e.g. de vapeur d'eau pour un électrolyseur) est mis en oeuvre à une deuxième fréquence prédéterminée $f_2 = \frac{1}{T_2}$, où $T_2$ est égale à la durée mise par le dispositif pour atteindre X$_2$% d'un régime stationnaire suite à une perturbation sur le débit de gaz de l'alimentation en gaz, où X$_2$ est supérieure ou égal à 80. Notamment, X$_2$ est inférieur ou égal à 90.

En d'autres termes, il existe un délai court mais non négligeable entre une modification du courant dans l'empilement et l'établissement du nouvel équilibre des réactions électrochimiques résultant de cette modification. Ainsi, la tension instantanée mesurée n'est pas représentative des phénomènes se déroulant dans l'empilement en fonctionnement stationnaire. En adoptant une régulation dont la fréquence est plus élevée que les constantes de temps des phénomènes électrochimiques, la régulation se fonde donc sur une mesure non pertinente. Il s'ensuit que, sans mesure particulière, la régulation peut être non précise et/ou qu'il faut une grande durée pour obtenir la stabilisation du point de fonctionnement de l'empilement. En adoptant une fréquence de régulation conforme aux phénomènes électrochimiques, dont l'empilement est le siège, une régulation plus précise et plus rapide est obtenue, y compris lorsque la régulation se fonde sur une simple loi de régulation. Ce type de problématique se pose également avec l'alimentation en gaz qui présente une constante de temps importante, de sorte qu'adapter la fréquence de la deuxième régulation à la durée d'établissement d'un régime stationnaire dans l'empilement, permet de faciliter la régulation.

En particulier, le pilotage du courant électrique est mis en oeuvre à une première fréquence prédéterminée $f_1 = \frac{1}{T_1}$, où $T_1$ est supérieure à 100 millisecondes, avantageusement inférieure à 1 seconde. Le pilotage du débit de gaz $D_G$ est mis en oeuvre à une deuxième fréquence prédéterminée $f_2 = \frac{1}{T_2}$, où $T_2$ est supérieure à 5 secondes, et avantageusement inférieure à 10 secondes.

Selon un mode de réalisation, le module de mesure du taux calcule le taux $\tau_{mesuré}$ en fonction du courant électrique *I* en sortie du premier régulateur et du débit de gaz $D_G$ en sortie du deuxième régulateur.

En d'autres termes, concernant l'électrolyseur, le taux de conversion n'est pas calculé en fonction d'une mesure du débit d'hydrogène produit. Connaissant le débit $D_{H_2O}$ de vapeur d'eau injectée et la mesure $D_{H_2}$ du débit d'hydrogène en sortie, il est en effet possible de calculer le taux de conversion selon la formule $D_{H_2}/D_{H_2O}$. Toutefois, cette mesure du taux de conversion n'est pas représentative à l'instant t du fonctionnement de l'empilement car elle est réalisée en aval du procédé sur des gaz produit à un instant précédent t-Δt, Δt étant le temps de parcours des gaz depuis l'empilement jusqu'au capteur de débit en sortie d'électrolyseur. En adoptant une modélisation du taux de conversion en fonction du courant injecté *I* et du débit de vapeur d'eau $D_{H_2O}$, il est par contre obtenu une estimation en temps réel du taux de conversion.

Les mêmes constatations s'appliquent d'autant plus à une pile SOFC que la mesure du débit d'hydrogène en sortie de pile n'est pratiquement jamais instrumentée sur les systèmes industriels et ne donnerait de la même façon qu'un résultat différé d'un Δt non négligeable par rapport au point de fonctionnement instantané.

Notamment, le module de mesure du taux de conversion calcule le taux de conversion selon la relation :

$$\tau_{mesuré} = 41{,}789 \times \frac{|I|}{D_G}$$

Les inventeurs ont en effet constaté qu'un modèle des gaz parfaits, menant à l'équation de Faraday, permet de prédire de manière satisfaisante le taux de conversion/taux d'utilisation pour le contrôle du point de fonctionnement de l'empilement.

Selon un mode de réalisation, le premier régulateur met en oeuvre un pilotage du courant électrique selon les relations :

- si $V_{mesuré} > (1 + \alpha/100) \times V_0$ alors $I$ est diminué de $\alpha$% ;
- si $V_{mesuré} < (1 - \alpha/100) \times V_0$ alors $I$ est augmenté de $\alpha$% ;
- si $(1 - \alpha/100) \times V_0 \leq V_{mesuré} \leq (1 + \alpha/100) \times V_0$ alors $I$ est conservé.

expressions dans lesquelles $\alpha$ est un paramètre positif prédéterminé.

Une telle loi de régulation, bien que simple, permet de stabiliser la tension mesurée sur la consigne de tension $V_0$ avec une erreur de 2. $\alpha$%.

Selon un mode de réalisation permettant une convergence plus rapide et un bon fonctionnement même à très faible intensité :

- lorsque le courant $I$ est inférieur ou égal à $I_{max}/\beta$, le premier régulateur met en oeuvre un premier pilotage du courant électrique selon les relations :

    - si $V_{mesuré} > (1 + \alpha/100) \times V_0$ alors $I=0$ ;
    - si $V_{mesuré} < (1 - \alpha/100) \times V_0$ alors $I$ est augmenté de $I_{max}/\beta$;
    - si $(1 - \alpha/100) \times V_0 \leq V_{mesuré} \leq (1 + \alpha/100) \times V_0$ alors $I$ est conservé.

- lorsque le courant $I$ est supérieur à $I_{max}/\beta$, le premier régulateur met en oeuvre un second pilotage du courant électrique selon les relations :

    - si $V_{mesuré} > (1 + \delta/100) \times V_0$ alors $I$ est diminué de $\gamma$%
    - si $(1 + \delta/100) \times V_0 \geq V_{mesuré} > (1 + \alpha/100) \times V_0$ alors $I$ est diminué de $\sigma$% ;
    - si $V_{mesuré} < (1 - \delta/100) \times V_0$ alors $I$ est augmenté de $\gamma$% ;
    - si $(1 - \alpha/100) \times V_0 \leq V_{mesuré} < (1 - \delta/100) \times V_0$ alors $I$ est augmenté de $\sigma$%
    - si $(1 - \alpha/100) \times V_0 \leq V_{mesuré} \leq (1 + \alpha/100) \times V_0$ alors $I$ est conservé.

expressions dans lesquelles $I_{max}$ est l'intensité maximale qui peut traverser l'empilement (e.g. qui peut être délivrée par l'alimentation électrique d'un électrolyseur), $\beta$ est un paramètre positif prédéterminé, et $\alpha$, $\delta$, $\sigma$ et $\gamma$ sont des paramètres positifs prédéterminés, avec $\delta > \alpha$ et $\gamma > \sigma$.

En d'autres termes, cette régulation en plusieurs phases, définie en fonction de l'intensité de courant, permet une régulation sur la consigne de tension $V_0$ avec une erreur de 2. $\alpha$% tout en obtenant une convergence rapide vers la consigne $V_0$.

Plus particulièrement :

- $\alpha$ est inférieur à 0,30, et de préférence égal à 0,25,
- $\beta$ est supérieur à 100, et de préférence égal à 300,
- $\delta$ est supérieur ou égal à 1,2 fois $\alpha$,
- $\sigma$ est supérieur à 0,1 , et de préférence égal à 0,2.
- $\gamma$ est supérieur ou égal à 2,5 fois $\sigma$.

Selon un mode de réalisation particulier, le deuxième régulateur met en outre un pilotage selon les relations :

- si $\tau_{mesuré} > (1 + \varepsilon/100) \times \tau_0$ alors $D_G$ est augmenté de $\varepsilon$% ;
- si $\tau_{mesuré} < (1 - \varepsilon/100) \times \tau_0$ alors $D_G$ est diminué de $\varepsilon$% ; et
- si $(1 - \varepsilon/100) \times \tau_0 \leq \tau_{mesuré} \leq (1 + \varepsilon/100) \times \tau_0$ alors $D_G$ est conservé.

expressions dans lesquelles $\varepsilon$ est un paramètre positif prédéterminé.

Une telle loi de régulation, bien que simple, permet de stabiliser le taux mesuré $\tau_{mesuré}$ sur la consigne de taux $r_0$ avec une erreur de 2. $\varepsilon$%.

Selon un mode de réalisation, le deuxième régulateur met en oeuvre un pilotage de débit de gaz selon les relations :

- si $\tau_{mesuré} > (1 + \rho/100) \times \tau_0$ alors $D_G$ est augmenté de $\rho$%
- si $(1 + \rho/100) \times \tau_0 \geq \tau_{mesuré} > (1 + \varepsilon/100) \times \tau_0$ alors $D_G$ est augmenté de $\varepsilon$% ;
- si $\tau_{mesuré} < (1 - \rho/100) \times \tau_0$ alors $D_G$ est diminué de $\rho$% ;
- si $(1 - \varepsilon/100) \times \tau_0 > \tau_{mesuré} \geq (1 - \rho/100) \times \tau_0$ alors $D_G$ est diminué de $\varepsilon$% ; et
- si $(1 - \varepsilon/100) \times \tau_0 \leq \tau_{mesuré} \leq (1 + \varepsilon/100) \times \tau_0$ alors $D_G$ est conservé.

expressions dans lesquelles $\varepsilon$ et $\rho$ sont des paramètres positifs prédéterminés, avec $\rho > \varepsilon$.

En d'autres termes, cette régulation, dont l'amplitude est variable en fonction de l'amplitude de l'erreur $\tau_0$ - $\tau_{mesuré}$, permet une régulation sur la consigne de tension $\tau_0$ avec une erreur de 2. $\varepsilon$% tout en obtenant une convergence rapide vers la consigne $\tau_0$.

Plus particulièrement, $\varepsilon$ est inférieur à 1, et de préférence égal à 0, 5, et $\rho$ est supérieur à 5, et de préférence égal à 10.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques, et dans lesquels :

- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'une cellule électrochimique d'une pile SOFC ;
- la figure 4 est une vue schématique d'une architecture de régulation de l'empilement de la figure 2 ; et
- la figure 5 est un tracé de l'évolution de la tension aux bornes de l'empilement de la figure 2 suite à une perturbation du courant électrique dans celui-ci et illustrant une période de mise à jour de la régulation sur la tension décrite en relation avec la figure 4.

## DESCRIPTION DETAILLEE DE L'INVENTION

Il va à présent être décrit un système électrochimique comprenant un électrolyseur EVHT, par exemple tel que décrit en relation avec les figures 1 et 2, complété par des boucles de régulation selon l'invention. En se référant à la figure 2,

- l'alimentation électrique **28** est une source de courant pilotable au moyen d'un signal de commande de courant $I^c$ ;
- l'alimentation en vapeur d'eau **22** est pilotable au moyen d'un signal de commande de débit de vapeur d'eau $D_{H_2O}^C$ ;
- et un capteur de tension **34,** par exemple un voltmètre, est prévu pour mesurer la tension $V_{mesuré}$ aux bornes **30, 32** de l'empilement **20,** et délivrer celle-ci.

Dans ce qui suit, il est supposé que les alimentations en vapeur d'eau **22** et électrique **28** sont idéalement régulées sur leurs signaux respectifs de commande, le courant électrique et le débit en vapeur d'eau étant à tout moment respectivement égaux auxdits signaux. Bien entendu, en pratique ces régulations peuvent être non idéales, l'invention s'appliquant bien entendu également dans un tel cas.

La figure 4 est une vue schématique d'une structure de commande **50** de l'électrolyseur **20, 22, 24, 26, 28, 34,** résumé par le bloc **52.** On note ainsi que l'invention s'applique à tout type d'électrolyseur dès lors qu'il est possible de commander le débit de vapeur d'eau et le courant injecté dans l'empilement et de mesurer une tension de l'empilement.

Le système électrochimique selon l'invention comporte en outre une unité de commande **54,** comprenant par exemple :

- des moyens **56** de conversion analogique/numérique pour numériser la tension $V_{mesuré}$ ;
- une unité de traitement d'information numérique **58** :

  ■ recevant une consigne numérique $V_0$ pour la tension aux bornes **30, 32** de l'empilement **20** et une consigne de taux de conversion de vapeur d'eau $SC_0$ et la mesure de tension numérisée $V_{mesurée}$;

  ■ calculant une commande de courant numérique $I^c$ et une commande de débit de vapeur d'eau $D_{H_2O}^C$ en fonction des entrées reçues ;

- le cas échéant des moyens de conversion numérique/analogique **60** pour fournir des valeurs analogiques à partir des valeurs numériques $I^c$ et $D_{H_2O}^C$ à la source de courant pilotable **28** et à l'alimentation pilotable en vapeur d'eau **22.**

Par soucis de concision, il est fait indifféremment référence à la valeur numérique ou analogique d'une grandeur, le caractère analogique ou numérique se comprenant aisément du contexte dans lequel ladite grandeur est utilisée.

Notamment, lorsqu'il est fait référence à la tension mesurée, notamment sous l'expression « $V_{mesurée}$ » ou $V_{mesurée}$ ($k.T_1$), dans le cadre d'un calcul, il s'agit de la dernière valeur numérisée et mémorisée de la tension mesurée par le capteur **30.**

L'unité **58** comporte :

- un premier régulateur numérique **62** régulant la tension mesurée $V_{mesuré}$ sur la consigne de tension $V_0$ en pilotant le courant injecté $I^C$ dans l'empilement selon une loi de régulation $K_V$ :

$$I^C(k.T_1) = K_V\big(V_0 - V_{mesurée}(k.T_1)\big)$$

où $k.T_1$ est le temps jusqu'au k$^{\text{ième}}$ moment de mise à jour du signal de commande du courant injecté dans l'empilement, la loi de commande $K_V$ étant mise en oeuvre avec une fréquence $f_1 = \frac{1}{T_1}$ ; et

- un deuxième régulateur numérique **64** régulant le taux de conversion mesuré $SC_{mesuré}$ sur la consigne de taux $SC_0$ en pilotant le débit de vapeur d'eau $D^C_{H_2O}$, par exemple un débit volumique, injecté dans l'empilement **20** selon une loi de régulation :

$$D^C_{H_2O}(l.T_2) = K_{SC}\big(SC_0 - SC_{mesuré}(l.T_2)\big)$$

où $l.T_2$ est le temps jusqu'au l$^{\text{ième}}$ moment de mise à jour du signal de commande du débit de vapeur d'eau injecté dans l'empilement, la loi de commande $K_{SC}$ étant mise en oeuvre avec une fréquence $f_2 = \frac{1}{T_2}$.

De manière avantageuse, la fréquence $f_1$ est adaptée à la dynamique des phénomènes déclenchés par une modification du courant injecté $I^C$ dans l'empilement **20.** Les inventeurs ont en effet noté que ces phénomènes, notamment une modification des phénomènes d'oxydo-réduction et de la quantité d'$O^{2-}$ traversant les membranes à oxyde solide **16,** mettent un certain temps pour se stabiliser. Ainsi, une modification trop fréquente du courant injecté, et donc une modification du courant alors même que le point de fonctionnement est loin d'être stabilisé, peut rendre la régulation instable sans mesure particulière, ce qui complexifie la mise au point de la loi de pilotage du courant. En outre, entre le moment de modification du courant injecté et l'observation des effets de cette modification sur le point de fonctionnement de l'empilement au travers de la tension mesurée $V_{mesuré}$, il peut s'écouler également un certain temps, signifiant que pendant cette période, la tension mesurée $V_{mesuré}$ n'est pas représentative des phénomènes ayant effectivement lieu dans l'empilement. Là encore, la régulation de la tension peut être mise en difficulté. De manière avantageuse, la période $T_1$ de mise à jour du courant est choisie de sorte que le point de fonctionnement de l'empilement est égal, ou proche, de son régime stationnaire avant de modifier encore une fois le courant.

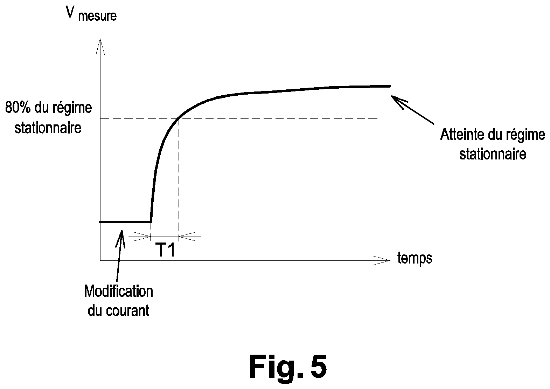

En se référant à la figure 5, la période $T_1$ est choisie supérieure à X% de la durée mise par la tension mesurée $V_{mesuré}$ pour atteindre un régime stationnaire suite à une perturbation du courant, par exemple sous la forme d'un échelon, X étant de préférence supérieur à 80%. Les inventeurs ont noté qu'avec une telle valeur de $T_1$, il est plus simple de concevoir une loi de régulation stable, une loi de régulation simple pouvant même être mise en oeuvre. De préférence, X est inférieur à 90 %. Bien qu'une valeur de X=100 soit dans l'idéal la meilleure du point de vue de la stabilisation du point de fonctionnement de l'empilement, les inventeurs ont cependant observé que la stabilisation du point de fonctionnement peut être asymptotique, de sorte qu'une période $T_1$ égale à la durée de stabilisation serait trop importante, la régulation perdant donc en efficacité. Pour des électrolyseurs du type décrit précédemment, la période $T_1$ est supérieure à 100 millisecondes et de préférence inférieure à 1 seconde.

Par exemple, la période $T_1$ est mesurée en usine par le constructeur sur un électrolyseur de test, et la valeur ainsi mesurée est mémorisée dans l'unité de commande **54** de chaque électrolyseur ensuite vendu. Dans une autre variante, chaque électrolyseur fait l'objet d'une mesure de la période $T_1$ avant sa mise en service, l'unité de commande de l'électrolyseur mémorisant la période $T_1$ caractéristique de ce dernier. Avantageusement, la période $T_1$ est mise à jour régulièrement pour tenir compte de l'état d'usure de l'empilement. Bien évidemment, d'autres grandeurs peuvent être observées pour déterminer la stabilisation du point de fonctionnement de l'électrolyseur suite à une perturbation du courant. Par exemple, l'utilisation de la méthode d'interruption de courant ou la spectrométrie d'impédance complexe sur la gamme 0,1Hz à 1kHz peuvent être mises en oeuvre pour déterminer la période $T_1$. Ces méthodes de mesures, par exemple décrites dans la publication « Electrical test methods for on-line fuel cell ohmic résistance measurement » de K.R Cooper & M. Smith (Ref. Journal Of Power Sources 160 (2006) 1088-1095)) permettent une observation fine des phénomènes dont l'électrolyseur est le siège et donc une détermination de la période $T_1$ plus précise.

De manière analogue, la fréquence $f_2$ est adaptée à la dynamique des phénomènes déclenchés par une modification du débit de vapeur d'eau $D_{H_2O}^C$ dans l'empilement **20**. Les inventeurs ont en effet noté qu'il faut un certain temps pour que le débit de vapeur d'eau au sein de l'empilement **20** s'établisse effectivement sur la valeur $D_{H_2O}^C$. Tout d'abord, les canalisations de l'alimentation en vapeur d'eau **22** peuvent présenter une longueur conséquente de sorte qu'il existe un retard entre la modification de la commande du débit et l'entrée effective de la vapeur d'eau selon le nouveau débit dans l'empilement. Ensuite, les gaz présents dans les cellules, dont la composition est dictée par le débit $D_{H_2O}^C$ précédemment appliqué, doivent être évacués au moins partiellement pour qu'une nouvelle composition, déterminée par le nouveau débit $D_{H_2O}^C$, s'établisse. De préférence, la période $T_2$ est choisie supérieure à X% de la durée mise par la tension mesurée $V_{mesuré}$ pour atteindre un régime stationnaire suite à une perturbation du débit de vapeur d'eau, par exemple sous la forme d'un échelon, X étant de préférence supérieur à 80%. Pour des raisons similaires de comportement asymptotique à celles évoquées en relation avec la période $T_1$, X est de préférence inférieure à 90. Pour un électrolyseur du type précité, la période $T_2$ est inférieure à 10 secondes, et de préférence supérieure à 5s.

La période $T_2$ est mesurée sur un banc de test pour chaque électrolyseur mis en service, une seule fois en usine ou mise à jour régulièrement.

A la vue de ce qui précède, on note donc que $T_2 > T_1$, signifiant que la commande de courant est plus fréquemment mise à jour que la commande de débit de vapeur d'eau.

Concernant le premier régulateur numérique **62,** le pilotage du courant électrique injecté dans l'empilement **20** est donc de préférence réalisé en fonction de la tension effectivement mesurée, par exemple au moyen d'un voltmètre, aux bornes de l'empilement. Concernant le second régulateur **64,** plusieurs types de mesure $SC_{mesuré}$ du taux de conversion SC peuvent être mises en oeuvre.

Selon une première variante, une mesure $D_{H_2}$ du débit d'hydrogène produit par l'empilement **20** est mise en oeuvre. Connaissant le débit de vapeur d'eau injecté dans l'empilement, le taux de conversion SC est calculé par l'unité de commande **54** selon la relation $SC_{mesurée} = D_{H_2}/D_{H_2O}^C$. Toutefois, comme précédemment décrit, une telle mesure est différée dans le temps et ne donne pas une information en temps réel du fonctionnement de l'empilement. Selon une seconde variante, le taux de conversion SC est estimé en temps réel sans nécessiter de mesure de débit de gaz en aval.

Notamment, l'unité de traitement **58** comporte un module **66** de mesure du taux de conversion SC en fonction du courant $I^C$ et du débit de vapeur $D_{H_2O}^C$ injectés dans l'empilement **20**. Le courant électrique et/ou le débit de vapeur peuvent être directement mesurés, par tout capteur approprié. De préférence, ces grandeurs sont estimées égales aux valeurs correspondantes déterminées par les régulateurs **62** et **64.** L'estimation du taux de conversion est mise en oeuvre sur la base d'un modèle de l'électrolyse de la vapeur d'eau par l'empilement selon la relation :

$$SC_{mesuré} = M\left(I^C, D_{H_2O}^C\right).$$

Ce modèle est de préférence un modèle de gaz parfait selon la relation :

$$SC_{mesuré} = 41{,}789 \times \frac{|I^C|}{D_{H_2O}^C}$$

où $SC_{mesuré}$ s'exprime en %, $I^C$ s'exprime en ampère (A), et $D_{H_2O}^C$ s'exprime en normo litre par heure (Nl/h), la constante 41,789 provenant la loi de Faraday appliquée à l'électrolyse de la vapeur d'eau ( $41{,}789 = \frac{3600}{2.F} \times V \times 100$, avec $F$ = 96485 C.mol$^{-1}$ la constante de Faraday et $V$=22,41.mol$^{-1}$ le volume molaire des gaz parfaits).

Ainsi, à chaque mise à jour du courant $I^C$ par le premier régulateur **62,** le module de mesure **66** calcule une nouvelle valeur $SC_{mesurée}(l.T_2)$ du taux de conversion selon la relation

$$SC_{mesurée}(l.T_2) = 41{,}789 \times \frac{|I^C(k.T_1)|}{D_{H_2O}^C((l-1).T_2)},$$ où $I^C(k.T_1)$ est donc ici la valeur mise à jour du courant $I^C$ et

$D_{H_2O}^C((l-1).T_2)$ est la valeur courante du débit de vapeur d'eau $D_{H_2O}^C$. Cette valeur est mémorisée par le module de mesure **66** et est utilisée lors de l'itération suivante « $l$ » de mise à jour du débit.

Bien entendu, si la fréquence de la deuxième régulation est plus importante $f_2$ de sorte que $f_2 > f_1$ alors la mesure $SC_{mesuré}$ est recalculée à chaque mise à jour du débit de vapeur d'eau. D'une manière générale, la mesure $SC_{mesuré}$ peut être mise à jour à chaque mise à jour du courant électrique et du débit de vapeur d'eau injecté dans l'empilement.

Bien que fondée sur une simplification importante, à savoir une modélisation des gaz présents sur les cathodes comme étant des gaz parfaits, les inventeurs ont noté qu'une telle modélisation permettait une estimation satisfaisante du taux de conversion SC.

En outre, il est remarquable que le point de fonctionnement de l'électrolyseur est régulé à l'aide d'une seule et unique mesure sur l'électrolyseur, et plus particulièrement une mesure de la tension aux bornes de l'empilement. En effet, en utilisant un modèle du taux de conversion, les lois de commande de l'électrolyseur sont égales à :

$$I^C(k.T_1) = K_V\big(V_0 - V_{mesurée}(k.T_1)\big)$$

$$D_{H_2O}^C(l.T_2) = K_{SC}\left(SC_0 - M\big(K_V\big(V_0 - V_{mesurée}(k.T_1)\big), D_{H_2O}^C\big)\right)$$

Comme on le constate, la tension $V_{mesurée}$ est la seule mesure prise en compte, alors même que cela permet de réguler deux grandeurs, à savoir la tension elle-même et le taux de conversion.

Concernant le premier régulateur **62,** dans une première variante, la loi de pilotage $I^C(k.T_1) = K_V(V_0 - V_{mesurée}(k.T_1))$ est mise en oeuvre, selon les relations :

- si $V_{mesuré} > (1 + \alpha/100) \times V_0$ alors $I^C$ est diminué de $\alpha\%$, à savoir $I^C(k.T_1) = I^C((k-1).T_1) \times (1 - \alpha/100)$ ;
- si $V_{mesuré} < (1 - \alpha/100) \times V_0$ alors $I^C$ est augmenté de $\alpha\%$, à savoir $I^C(k.T_1) = I^C((k-1).T_1) \times (1 + \alpha/100)$ ;
- si $(1 - \alpha/100) \times V_0 \leq V_{mesuré} \leq (1 + \alpha/100) \times V_0$ alors $I^C$ est conservé, à savoir $I^C(k.T_1) = I^C((k-1).T_1)$.

où $\alpha$ est un paramètre positif prédéterminé fixant l'erreur de régulation à 2. $\alpha\%$. Notamment, $\alpha$ est inférieur à 0,30, et de préférence égal à 0,25.

Dans une seconde variante, l'amplitude de la modification du courant $I^C$ dépend également de la valeur courante du courant injecté dans l'empilement, ce qui permet ainsi d'accélérer la convergence de la régulation. Notamment, le pilotage du courant est mis en oeuvre selon les relations :

- lorsque le courant $I^C((k-1).T_1)$ est inférieur ou égal à $I_{max}/\beta$, alors :

  - si $V_{mesuré} > (1 + \alpha/100) \times V_0$ alors $I=0$;
  - si $V_{mesuré} < (1 - \alpha/100) \times V_0$ alors $I$ est augmenté de $I_{max}/\beta$, à savoir $I^C(k.T_1) = I^C((k-1).T_1) + I_{max}/\beta$ ;
  - si $(1 - \alpha/100) \times V_0 \leq V_{mesuré} \leq (1 + \alpha/100) \times V_0$ alors $I$ est conservé, à savoir $I^C(k.T_1) = I^C((k-1).T_1)$;

- lorsque le courant $I^C((k-1).T_1)$ est supérieur $I_{max}/\beta$, alors :

  - si $V_{mesuré} > (1 + \delta/100) \times V_0$ alors $I$ est diminué de $\gamma\%$, à savoir $I^C(k.T_1) = I^C((k-1).T_1) \times (1 - \gamma/100)$ ;
  - si $(1 + \delta/100) \times V_0 \geq V_{mesuré} > (1 + \alpha/100) \times V_0$ alors $I$ est diminué de $\sigma\%$, à savoir $I^C(k.T_1) = I^C((k-1).T_1) \times (1 - \alpha/100)$ ;
  - si $V_{mesuré} < (1 - \delta/100) \times V_0$ alors $I$ est augmenté de $\gamma\%$, à savoir $I^C(k.T_1) = I^C((k-1).T_1) \times (1 + \gamma/100)$ ;
  - si $(1 - \alpha/100) \times V_0 \leq V_{mesuré} < (1 - \delta/100) \times V_0$ alors $I$ est augmenté de $\sigma\%$, à savoir $I^C(k.T_1) = I^C((k-1).T_1) \times (1 + \sigma/100)$
  - si $(1 - \alpha/100) \times V_0 \leq V_{mesuré} \leq (1 + \alpha/100) \times V_0$ alors $I$ est conservé, à savoir $I^C(k.T_1) = I^C((k-1).T_1)$.

expressions dans lesquelles $I_{max}$ est l'intensité maximale qui peut être délivrée par l'alimentation électrique, $\beta$ est un paramètre positif prédéterminé, et $\alpha$, $\delta$, $\sigma$ et $\gamma$ sont des paramètres positifs prédéterminés, avec $\delta > \alpha$ et $\gamma > \sigma$. Plus particulièrement, $\alpha$ est inférieur à 0,30, et de préférence égal à 0,25, $\beta$ est supérieur à 100, et de préférence égal à 300, $\delta$ est supérieur ou égal à 1,2 fois $\alpha$, et /ou $\sigma$ est supérieur à 0,1, et de préférence égal à 0,2, $\gamma$ est supérieur ou égal à 2,5 fois $\sigma$.

Concernant le deuxième régulateur **64,** dans une première variante, la loi de pilotage

$$D_{H_2O}^C(l.T_2) = K_{SC}\left(SC_0 - SC_{mesurée}(l.T_2)\right)$$ est mise en oeuvre, selon les relations :

- si $SC_{mesuré}(l.T_2) > (1 + \varepsilon/100) \times SC_0$ alors $D_{H_2O}^C$ est augmenté de $\varepsilon\%$, à savoir

$$D_{H_2O}^C(l.T_2) = (1 + \varepsilon/100) \times D_{H_2O}^C((l-1).T_2) \;;$$

- si $SC_{mesuré}(l.T_2) < (1 - \varepsilon/100) \times SC_0$ alors $D_{H_2O}^C$ est diminué de $\varepsilon\%$, à savoir

$$D_{H_2O}^C(l.T_2) = (1 - \varepsilon/100) \times D_{H_2O}^C((l-1).T_2); \text{ et}$$

- si $(1 - \varepsilon/100) \times SC_0 \leq SC_{mesuré} \leq (1 + \varepsilon/100) \times SC_0$ alors $D_{H_2O}^C$ est conservé, à savoir

$$D_{H_2O}^C(l.T_2) = D_{H_2O}^C((l-1).T_2).$$

où $\varepsilon$ est un paramètre positif prédéterminé.

Une telle loi de régulation, bien que simple, permet de stabiliser le taux mesuré $SC_{mesuré}$ sur la consigne de taux $SC_0$ avec une erreur de 2. $\varepsilon\%$.

Selon une seconde variante, la gamme d'erreur de régulation $SC_0$-$SC_{mesuré}$ est divisée en un nombre plus important d'intervalles, ce qui permet de définir plusieurs amplitudes de modification du débit de vapeur d'eau, et ainsi obtenir une convergence plus rapide pour une même précision de la régulation. Notamment, le pilotage du débit de vapeur d'eau est mis en oeuvre selon les relations :

- si $SC_{mesuré}(l.T_2) > (1 + \rho/100) \times SC_0$ alors $D_{H_2O}^C$ est augmenté de $\rho\%$, à savoir

$$D_{H_2O}^C(l.T_2) = (1 + \rho/100) \times D_{H_2O}^C((l-1).T_2) \;;$$

- si $(1 + \rho/100) \times SC_0 \geq SC_{mesuré}(l.T_2) > (1 + \varepsilon/100) \times SC_0$ alors $D_{H_2O}^C$ est augmenté de $\varepsilon\%$, à savoir

$$D_{H_2O}^C(l.T_2) = (1 + \varepsilon/100) \times D_{H_2O}^C((l-1).T_2);$$

- si $SC_{mesuré}(l.T_2) < (1 - \rho/100) \times SC_0$ alors $D_{H_2O}^C$ est diminué de $\rho\%$, à savoir

$$D_{H_2O}^C(l.T_2) = (1 - \rho/100) \times D_{H_2O}^C((l-1).T_2);$$

- si $(1 - \varepsilon/100) \times SC_0 > SC_{mesuré}(l.T_2) \geq (1 - \rho/100) \times SC_0$ alors $D_{H_2O}^C$ est diminué de $\varepsilon\%$, à savoir

$$D_{H_2O}^C(l.T_2) = (1 - \varepsilon/100) \times D_{H_2O}^C((l-1).T_2); \text{ et}$$

- si $(1 - \varepsilon/100) \times SC_0 \leq SC_{mesuré}(l.T_2) \leq (1 + \varepsilon/100) \times SC_0$ alors $D_{H_2O}^C$ est conservé, à savoir

$$D_{H_2O}^C(l.T_2) = D_{H_2O}^C((l-1).T_2).$$

où $\varepsilon$ et $\rho$ sont des paramètres positifs prédéterminés, avec $\rho > \varepsilon$. Plus particulièrement, $\varepsilon$ est inférieur à 1, et de préférence égal à 0,5, et $\rho$ est supérieur à 5, et de préférence égal à 10.

Bien entendu d'autres lois de régulation/commande peuvent être mises en oeuvre, par exemple de type PID.

Il a été décrit une application de l'invention à un électrolyseur de vapeur d'eau à haute température. L'invention s'applique également à une pile à combustible à oxyde solide à haute température constituée d'un empilement de cellules élémentaires électrochimiques, tel que décrit précédemment. Dans un tel cas, il convient de remplacer le débit de vapeur d'eau $D_{H_2O}^C$ par le débit d'hydrogène $D_{H_2}$ et le taux de conversion SC par le taux d'utilisation de l'hydrogène *TU.* De manière analogue au calcul de taux de conversion au moyen d'un modèle, dans un mode de réalisation le taux d'utilisation TU est également calculé sur la base d'un modèle en fonction des sorties des régulateurs, par exemple

$$TU = |I^C| \times \frac{41{,}789}{D_{H_2}^C}\,.$$

selon la relation

De même, il a été décrit des modes de réalisation, dans lesquels le gaz $H_2O$ ou $H_2$ est le seul injecté. L'invention s'applique également aux électrolyseurs/piles dans lesquels ces gaz sont mélangés, en quantité connue, avec d'autres gaz. Par exemple, dans le cadre d'un électrolyseur, il est usuel d'injecter un mélange gazeux d'$H_2O$ et de $H_2$ gazeux dans des proportions de 90% d'$H_2O$ et de 10% de $H_2$, ou de réaliser de la co-électrolyse avec un mélange gazeux d'$H_2O$ et de dioxyde de carbone ($CO_2$) dans des proportions variables. De même, dans le cadre d'une pile, il est usuel de remplacer ou d'ajouter à l'$H_2$ un autre combustible comme le méthane $CH_4$. Ces mélanges sont usuellement produits au moyen de vannes pilotables connectées à des réservoirs contenant les gaz purs. Selon l'invention, de telles vannes sont également pilotées pour respecter les proportions du mélange gazeux injecté. Notamment, dès qu'une mise à jour du débit de vapeur d'eau (resp. de $H_2$) est délivrée par le deuxième régulateur du taux de conversion SC (resp. de taux d'utilisation *TU*), les moyens de mélange des gaz sont immédiatement commandés pour respecter les proportions du mélange gazeux injecté.

## Revendications

1.  Système électrochimique (50) comportant :

    - un dispositif formant électrolyseur de vapeur d'eau à haute température ou pile à combustible à haute température, le dispositif comprenant un empilement (20) de cellules électrochimiques élémentaires (10) comprenant chacune deux électrodes (12, 14), et un électrolyte (16) intercalé entre les deux électrodes (12, 14), lesdites cellules étant connectées électriquement en série et l'empilement comprenant deux bornes électriques (30, 32) pour la génération d'un courant électrique *I* dans l'empilement traversant lesdites cellules ;
    - une alimentation en gaz (22) apte à alimenter selon un débit de gaz $D_G$:

        ▪ les électrodes de l'empilement formant cathodes (12) en vapeur d'eau si le dispositif est un électrolyseur à haute température ; ou
        ▪ les électrodes de l'empilement formant anodes (12) en dihydrogène si le dispositif est une pile à combustible à haute température ;

    - un circuit électrique (28) connecté aux bornes électriques (30, 32) de l'empilement pour contrôler le courant électrique *I* dans l'empilement ;

    *caractérisé* **en ce que** le système électrochimique comporte en outre

    - un module de mesure (34) d'une tension électrique $V_{mesurée}$ entre les bornes de l'empilement;
    - un premier régulateur (62) pour piloter le courant électrique *I* dans l'empilement de manière à réguler la tension mesurée sur une consigne de tension prédéterminée $V_0$ ;
    - un module de mesure (66) d'un taux $\tau_{mesuré}$, ledit taux $\tau_{mesuré}$ étant :

        ▪ un taux de conversion de la vapeur d'eau en hydrogène si le dispositif est un électrolyseur à haute température ; ou
        ▪ un taux d'utilisation du dihydrogène si le dispositif est une pile à combustible à haute température ;

    - un deuxième régulateur (64) pour piloter le débit de gaz $D_G$ de l'alimentation en gaz de manière à réguler le taux mesuré $\tau_{mesuré}$ sur une consigne prédéterminée de taux $\tau_0$.

2.  Système électrochimique selon la revendication 1, *caractérisé* **en ce que** le pilotage du courant électrique *I* est mis en oeuvre à une première fréquence prédéterminée $f_1 = \frac{1}{T_1}$, où $T_1$ est la durée mise par le dispositif pour atteindre $X_1$% d'un régime stationnaire suite à une perturbation du courant électrique *I* dans l'empilement, $X_1$ étant supérieur ou égal à 80.

**3.** Système électrochimique selon la revendication 2, **_caractérisé_ en ce que** $X_1$ est inférieur ou égal à 90.

**4.** Système électrochimique selon la revendication 1 ou 2, **_caractérisé_ en ce que** le pilotage du débit de gaz $D_G$ est mis en oeuvre à une deuxième fréquence prédéterminée $f_2 = \frac{1}{T_2}$, $f_2$ où $T_2$ est égale à la durée mise par le dispositif pour atteindre $X_2$% d'un régime stationnaire suite à une perturbation sur le débit de gaz de l'alimentation en gaz, où $X_2$ est supérieur ou égal à 80.

**5.** Système électrochimique selon la revendication 4, **_caractérisé_ en ce que** $X_2$ est inférieur ou égal à 90.

**6.** Système électrochimique selon l'une quelconque des revendications précédentes, **_caractérisé_ en ce que** le pilotage du courant électrique est mis en oeuvre à une première fréquence prédéterminée $f_1 = \frac{1}{T_1}$, où $T_1$ est supérieure à 100 millisecondes.

**7.** Système électrochimique selon la revendication 6, **_caractérisé_ en ce que** $T_1$ est inférieure à 1 seconde.

**8.** Système électrochimique selon l'une quelconque des revendications précédentes, **_caractérisé_ en ce que** le pilotage du débit de gaz $D_G$ est mis en oeuvre à une deuxième fréquence prédéterminée $f_2 = \frac{1}{T_2}$, où $T_2$ est supérieure à 5 secondes.

**9.** Système électrochimique selon la revendication 8, **_caractérisé_ en ce que** $T_2$ est inférieure à 10 secondes.

**10.** Système électrochimique selon l'une quelconque des revendications précédentes, **_caractérisé_ en ce que** le module de mesure du taux calcule le taux $\tau_{mesuré}$ en fonction du courant électrique $I$ en sortie du premier régulateur et du débit de gaz $D_G$ en sortie du deuxième régulateur.

**11.** Système électrochimique selon la revendication 10, **_caractérisé_ en ce que** le module de mesure du taux de conversion calcule le taux de conversion selon la relation :

$$\tau_{mesuré} = 41{,}789 \times \frac{|I|}{D_G}$$

**12.** Système électrochimique selon l'une quelconque des revendications précédentes, **_caractérisé_ en ce que** le premier régulateur met en oeuvre un pilotage du courant électrique selon les relations :

- si $V_{mesuré} > (1 + \alpha/100) \times V_0$ alors $I$ est diminué de $\alpha$% ;
- si $V_{mesuré} < (1 - \alpha/100) \times V_0$ alors $I$ est augmenté de $\alpha$% ;
- si $(1 - \alpha/100) \times V_0 \leq V_{mesuré} \leq (1 + \alpha/100) \times V_0$ alors $I$ est conservé.

expressions dans lesquelles $\alpha$ est un paramètre positif prédéterminé.

**13.** Système électrochimique selon l'une quelconque des revendications 1 à 11, **_caractérisé_ en ce que** :

- lorsque le courant $I$ est inférieur ou égal à $I_{max}/\beta$, le premier régulateur met en oeuvre un premier pilotage du courant électrique selon les relations :

  - si $V_{mesuré} > (1 + \alpha/100) \times V_0$ alors $I=0$;
  - si $V_{mesuré} < (1 - \alpha/100) \times V_0$ alors $I$ est augmenté de $I_{max}/\beta$ ;
  - si $(1 - \alpha/100) \times V_0 \leq V_{mesuré} \leq (1 + \alpha/100) \times V_0$ alors $I$ est conservé,

- lorsque le courant $I$ est supérieur $I_{max}/\beta$, le premier régulateur met en oeuvre un second pilotage du courant électrique selon les relations :

- si $V_{mesuré} > (1 + \delta/100) \times V_0$ alors $I$ est diminué de $\gamma\%$
- si $(1 + \delta/100) \times V_0 \geq V_{mesuré} > (1 + \alpha/100) \times V_0$ alors $I$ est diminué de $\sigma\%$ ;
- si $V_{mesuré} < (1 - \delta/100) \times V_0$ alors $I$ est augmenté de $\gamma\%$ ;
- si $(1 - \alpha/100) \times V_0 \leq V_{mesuré} < (1 - \delta/100) \times V_0$ alors $I$ est augmenté de $\sigma\%$
- si $(1 - \alpha/100) \times V_0 \leq V_{mesuré} \leq (1 + \alpha/100) \times V_0$ alors $I$ est conservé,

expressions dans lesquelles $I_{max}$ est l'intensité maximale qui peut traverser l'empilement, $\beta$ est un paramètre positif prédéterminé, et $\alpha$, $\delta$, $\sigma$ et $\gamma$ sont des paramètres positifs prédéterminés, avec $\delta > \alpha$ et $\gamma > \sigma$.

14. Système électrochimique selon l'une quelconque des revendications précédentes, ***caractérisé en ce que*** le deuxième régulateur met en oeuvre un pilotage de débit de gaz selon les relations :

- si $\tau_{mesuré} > (1 + \rho/100) \times \tau_0$ alors $D_G$ est augmenté de $\rho\%$
- si $(1 + \rho/100) \times \tau_0 \geq \tau_{mesuré} > (1 + \varepsilon/100) \times \tau_0$ alors $D_G$ est augmenté de $\varepsilon\%$ ;
- si $\tau_{mesuré} < (1 - \rho/100) \times \tau_0$ alors $D_G$ est diminué de $\rho\%$ ;
- si $(1 - \varepsilon/100) \times \tau_0 > \tau_{mesuré} > (1 - \rho/100) \times \tau_0$ alors $D_G$ est diminué de $\varepsilon\%$ ; et
- si $(1 - \varepsilon/100) \times \tau_0 \leq \tau_{mesuré} \leq (1 + \varepsilon/100) \times \tau_0$ alors $D_G$ est conservé.

expressions dans lesquelles $\varepsilon$ et $\rho$ sont des paramètres positifs prédéterminés, avec $\rho > \varepsilon$.

15. Système électrochimique selon l'une quelconque des revendications 1 à 13, ***caractérisé en ce que*** le deuxième régulateur met en outre un pilotage selon les relations :

- si $\tau_{mesuré} > (1 + \varepsilon/100) \times \tau_0$ alors $D_G$ est augmenté de $\varepsilon\%$ ;
- si $\tau_{mesuré} < (1 - \varepsilon/100) \times \tau_0$ alors $D_G$ est diminué de $\varepsilon\%$ ; et
- si $(1 - \varepsilon/100) \times \tau_0 \leq \tau_{mesuré} \leq (1 + \varepsilon/100) \times \tau_0$ alors $D_G$ est conservé.

expressions dans lesquelles $\varepsilon$ est un paramètre positif prédéterminé.

## Patentansprüche

1. Elektrochemisches System (50), das umfasst:

- eine Vorrichtung, die einen Hochtemperatur- Dampfelektrolyseur oder eine Hochtemperatur- Brennstoffzelle bildet, wobei die Vorrichtung einen Stapel (20) aus elektrochemischen Elementarzellen (10) umfasst, die jeweils zwei Elektroden (12, 14) und eine Elektrolyt (16), das zwischen die beiden Elektroden (12, 14) eingesetzt ist, enthalten, wobei diese Zellen elektrisch in Reihe geschaltet sind und der Stapel zwei elektrische Anschlüsse (30, 32) enthält, zur Erzeugung eines elektrischen Stroms $I$ im Stapel, der diese Zellen durchquert;
- eine Gaszufuhr (22), die in der Lage ist, entsprechend einem Gasdurchsatz $D_G$. folgendes zu liefern:

  - Wasserdampf an die Elektroden des Stapels, die Kathoden (12) bilden, wenn es sich bei der Vorrichtung um einen Hochtemperatur-Dampfelektrolyseur handelt, oder
  - Dihydrogen an die Elektroden des Stapels, die Anoden (12) bilden, wenn es sich bei der Vorrichtung um eine Hochtemperatur-Brennstoffzelle handelt;

- ein elektrischer Schaltkreis (28), verbunden mit den Anschlüssen (30, 32), zur Steuerung des elektrischen Stroms $I$ im Stapel;

***dadurch gekennzeichnet, dass*** das elektrochemische System ferner umfasst

- ein Modul (34) zum Messen einer elektrischen Spannung $V_{mesurée}$ zwischen den Anschlüssen des Stapels;
- einen ersten Regler (62) zum Steuern des elektrischen Stroms $I$ im Stapel, derart, dass die gemessene Spannung $V_{mesurée}$ auf einen vorher festgelegten Sollwert $V_0$; geregelt wird;
- ein Modul (66) zum Messen einer Umwandlungsrate $\tau_{mesuré}$, wobei es sich bei diesem $\tau_{mesuré}$ handelt::

  - um eine Umwandlungsrate des Dampfes in Wasserstoff, wenn es sich bei der Vorrichtung um einen Hochtemperatur- Dampfelektrolyseur handelt,;

■ eine Dihydrogen- Verbrauchsrate , wenn es sich bei der Vorrichtung um eine Hochtemperatur- Brennstoffzelle handelt;

- einen zweiten Regler (64) zum Steuern des Gasdurchsatzes $D_G$ der Gasversorgung, so dass die gemessene Rate, $\tau_{mesuré}$ auf einen Sollwert $\tau_0$ geregelt wird.

2.  Elektrochemisches System gemäß Anspruch 1, *dadurch gekennzeichnet, dass* die Steuerung des elektrischen Stroms $I$ bei einer ersten, vorher festgelegt Frequenz $f_1$ = $1/T_1$ umgesetzt wird, worin $T_1$ die Dauer ist, die die Vorrichtung benötigt, um **$X_1$%** eines stationären Betriebs zu erreichen, infolge einer Störung des elektrischen Stroms $I$ im Stapel, wobei $X_1$ größer oder gleich 80 ist.

3.  Elektrochemisches System gemäß Anspruch 2 *dadurch gekennzeichnet, dass* $X_1$ kleiner oder gleich 90 ist.

4.  Elektrochemisches System gemäß Anspruch 1 oder 2, *dadurch gekennzeichnet, dass* die Steuerung des Gasdurchsatzes $D_G$ bei einer zweiten, vorher festgelegten Frequenz $f_2$ = $1/T_2$ umgesetzt wird, worin $T_2$ gleich der Dauer ist, die die Vorrichtung benötigt, um $X_2$% eines stationären Betriebs zu erreichen, infolge einer Störung des Durchsatzes der Gasversorgung worin $X_2$ größer oder gleich 80 ist.

5.  Elektrochemisches System gemäß Anspruch 4 **dadurch gekennzeichnet, dass** $X_2$ kleiner oder gleich 90 ist.

6.  Elektrochemisches System gemäß irgendeinem der vorstehenden Ansprüche, *dadurch gekennzeichnet, dass* die Steuerung des elektrischen Stroms bei einer ersten, vorher festgelegten Frequenz $f_1$ = $1/T_1$ erfolgt, worin $T_1$ größer als 100 Millisekunden ist.

7.  Elektrochemisches System gemäß Anspruch 6 **dadurch gekennzeichnet, dass $T_1$** kleiner als 1 Sekunde ist.

8.  Elektrochemisches System gemäß irgendeinem der vorstehenden Ansprüche, *dadurch gekennzeichnet, dass* die Steuerung des Gasdurchsatzes $D_G$ bei einer zweiten, vorher festgelegten Frequenz $f_2$ = $1/T_2$ umgesetzt wird worin $T_2$ höher ist als 5 Sekunden.

9.  Elektrochemisches System gemäß Anspruch 8 **dadurch gekennzeichnet, dass $T_2$** kleiner als 10 Sekunden ist.

10. Elektrochemisches System gemäß irgendeinem der vorstehenden Ansprüche *dadurch gekennzeichnet, dass* das Messmodul des Satzes $\tau_{mesuré}$ in Anbhängigkeit vom elektrischen Strom $I$ am Auslass des ersten Gasdurchsatzreglers $D_G$ am Auslass des zweiten Reglers berechnet.

11. Elektrochemisches System gemäß Anspruch 10 *dadurch gekennzeichnet, dass* das Messmodul des Umwandlungssatzes den Umwandlungssatz gemäß der folgenden Gleichung berechnet:

$$\tau_{mesuré} = 41,789 \ X \ \frac{I/I}{D_G}$$

12. Elektrochemisches System gemäß irgendeinem der vorstehenden Ansprüche *dadurch gekennzeichnet, dass* der erste Regler eine Steuerung des elektrischen Stroms gemäß den folgenden Gleichungen veranlasst:

- wenn $V_{mesuré}$ > (1 + $\alpha$/100) x $V_0$, dann wird $I$ um $\alpha$% verringert;
- wenn $V_{mesuré}$ < (1 - $a/100$) x $V_0$, dann wird I um $a$% erhöht,
- wenn (1 - $a$/100) x $V_0$ < $V_{mesuré}$ < (1 + $a$/100) x $V_0$, dann wird $I$ beibehalten, bei diesen Gleichungen ist $a$ ein positiver, vorher festgelegter Parameter.

13. Elektrochemisches System gemäß irgendeinem der vorstehenden Ansprüche 1 bis 11 *dadurch gekennzeichnet, dass*

- wenn der Strom $I$ kleiner oder gleich $I_{max}/\beta$, ist, leitet der erste Regler die erste Steuerung des elektrischen Stromes ein, entsprechend den folgenden Gleichungen:

- wenn $V_{mesuré}$ > (1 + $\alpha$/100) x $V_0$, dann *I=0;*
- wenn $V_{mesuré}$ < (1 - *a*/100) x $V_0$, dann wird *I* um $I_{max}/\beta$ erhöht;
- wenn (1 - *a*/100) x $V_0 \leq V_{mesuré} \leq$ (1 + *a*/100) x $V_0$, dann wird I beibehalten,

- wenn der Strom höher ist als $I_{max}/\beta$, leitet der erste Regler eine zweite Steuerung des elektrischen Stroms ein, entsprechend den folgenden Gleichungen:

- wenn $V_{mesuré}$ > (1 + $\delta$/100) x $V_0$, dann wird *I* um $\gamma$% verringert;
- wenn (1 + $\delta$/100) x $V_0 \geq V_{mesuré} \geq$ (1 + $\alpha$/100) x $V_0$, dann wird *I* um $\sigma$% verringert;
- wenn $V_{mesuré}$ < (1 - $\delta$/100) x $V_0$, dann wird *I* um $\gamma$% erhöht;
- wenn (1 - *a*/100) x $V_0 \leq V_{mesuré}$ < (1 + $\delta$/100) x $V_0$, dann wird *I* um $\sigma$% erhöht
- wenn (1 - *a*/100) x $V_0 \leq V_{mesuré} \leq$ (1 + *a*/100) x $V_0$, dann wird *I* beibehalten, in diesen Gleichungen ist $I_{max}$ die maximale Stromstärke,

die durch den Stapel fließen kann, $\beta$ ist ein vorher festgelegter positiver Parameter und $\alpha$, $\delta$, $\sigma$ und $\gamma$ sind vorher festgelegte positive Parameter mit $\delta > \alpha$ und $\gamma > \sigma$.

**14.** Elektrochemisches System gemäß irgendeinem der vorstehenden Ansprüche ***dadurch gekennzeichnet, dass*** der zweite Regler eine Steuerung des elektrischen Stroms gemäß den folgenden Gleichungen veranlasst:

- wenn $\tau_{mesuré}$ > (1 + $\rho$/100) X $\tau_0$ dann wird *DG* um $\rho$% erhöht,
- wenn (1 + $\rho$/100) X $\tau_0 \geq \tau_{mesuré}$ > (1 + $\varepsilon$/100) X $\tau_0$ dann wird *DG* um $\varepsilon$% erhöht,
- wenn $\tau_{mesuré}$ < (1- $\rho$/100) X $\tau_0$ dann wird *DG* um $\rho$% verringert;
- wenn (1 - $\varepsilon$/100) X $\tau_0 > \tau_{mesuré} \geq$ (1-$\rho$/100) X $\tau_0$ dann wird $D_G$ um $\varepsilon$% verringert,
- wenn (1 -$\varepsilon$/100) X $\tau_0 \leq \tau_{mesuré} \leq$ (1 + $\varepsilon$/100) X $\tau_0$ dann wird $D_G$ beibehalten in diesen Gleichungen sind $\varepsilon$ und $\rho$ positive, vorher festgelegte Parameter, mit $\rho > \varepsilon$.

**15.** Elektrochemisches System gemäß irgendeinem der vorstehenden Ansprüche 1 bis 13, **dadurch gekennzeichnet, dass** der zweite Regler eine Steuerung des elektrischen Stroms gemäß den folgenden Gleichungen veranlasst:

- wenn $\tau_{mesuré}$ > (1 + $\varepsilon$/100) x $\tau_0$ dann wird *DG* um $\rho$% erhöht,;
- wenn $\tau_{mesuré}$ < (1- $\varepsilon$/100) x $\tau_0$ dann wird $D_G$ um $\varepsilon$% verringert;
- wenn (1 - $\varepsilon$/100) x $\tau_0 \leq \tau_{mesuré} \leq$ (1 + $\varepsilon$/100) x $\tau_0$ dann wird $D_G$ beibehalten.

bei diesen Gleichungen ist $\varepsilon$ ein positiver, vorher festgelegter Parameter.

**Claims**

**1.** An electrochemical system (50) comprising:

- a device forming a high-temperature steam electrolyzer or a high-temperature fuel cell, the device comprising a stack (20) of elementary electrochemical cells (10), each comprising two electrodes (12, 14), and an electrolyte (16) interposed between the two electrodes (12, 14), said cells being electrically connected in series and the stack comprising two electric terminals (30, 32) of generation of an electric current *I* in the stack crossing said cells;
- a gas supply (22) capable of supplying a gas flow rate $D_G$:

- the electrodes of the stack forming steam cathodes (12) if the device is a high-temperature electrolyzer; or
- the electrodes of the stack forming hydrogen anodes (12) if the device is a high-temperature fuel cell;

- an electric circuit (28) connected to the electric terminals (30, 32) of the stack to control the electric current *I* in the stack;

***characterized* in that** the electrochemical system further comprises:

- a module (34) for measuring an electric voltage $V_{measured}$ across the stack;
- a first regulator (62) for controlling the electric current *I* in the stack to regulate the measured voltage on a predetermined voltage set point $V_0$;

- a module (66) for measuring a rate $\tau_{measured}$, said rate $\tau_{measured}$ being:

- a rate of conversion of steam into hydrogen if the device is a high-temperature electrolyzer; or
- a rate of hydrogen utilization if the device is a high-temperature fuel cell;

- a second regulator (64) for controlling the gas flow rate $D_G$ of the gas supply to regulate the measured rate $\tau_{measured}$ on a predetermined rate set point $\tau_0$.

2. The electrochemical system of claim 1, ***characterized* in that** the control of electric current $I$ is implemented at a first predetermined frequency $f_1 = \dfrac{1}{T_1}$, where $T_1$ is the time taken by the device to reach $X_1$% of a steady state after a disturbance of electric current $I$ in the stack, $X_1$ being greater than or equal to 80.

3. The electrochemical system of claim 2, ***characterized* in that** $X_1$ is smaller than or equal to 90.

4. The electrochemical system of claim 1 or 2, ***characterized* in that** the control of gas flow rate $D_G$ is implemented at a second predetermined frequency $f_2 = \dfrac{1}{T_2}$, where $T_2$ is equal to the time taken by the device to reach $X_2$% of a steady state after a disturbance on the gas flow rate of the gas supply, where $X_2$ is greater than or equal to 80.

5. The electrochemical system of claim 1 or 2, ***characterized* in that** $X_2$ is smaller than or equal to 90.

6. The electrochemical system of any of the foregoing claims, ***characterized* in that** the control of the electric current is implemented at a first predetermined frequency $f_1 = \dfrac{1}{T_1}$, where $T_1$ is greater than 100 milliseconds.

7. The electrochemical system of claim 6, ***characterized* in that** $T_1$ is shorter than 1 second.

8. The electrochemical system of any of the foregoing claims, ***characterized* in that** the control of gas flow rate $D_G$ is implemented at a second predetermined frequency $f_2 = \dfrac{1}{T_2}$, where $T_2$ is greater than 5 seconds.

9. The electrochemical system of claim 8, ***characterized* in that** $T_2$ is shorter than 10 seconds.

10. The electrochemical system of any of the foregoing claims, ***characterized* in that** the rate measurement module calculates rate $\tau_{measured}$ according to the electric current $I$ at the output of the first regulator and to gate flow rate $D_G$ at the output of the second regulator.

11. The electrochemical system of claim 10, ***characterized* in that** the conversion rate measurement module calculates the conversion rate according to relation:

$$\tau_{measured} = 41.789 \times \frac{|I|}{D_G}$$

12. The electrochemical system of any of the foregoing claims, ***characterized* in that** the first regulator implements a control of the electric current according to relations:

- if $V_{measured} > (1 + \alpha/100) \times V_0$ then $I$ is decreased by $\alpha$%;
- if $V_{measured} < (1 - \alpha/100) \times V_0$ then $I$ is increased by $\alpha$%;
- if $(1 - \alpha/100) \times V_0 \leq V_{measured} \leq (1 + \alpha/100) \times V_0$, then $I$ is kept,

in which expressions $\alpha$ is a predetermined positive parameter.

**13.** The electrochemical system of any of claims 1 to 11, ***characterized* in that**:

- when current $I$ is smaller than or equal to $I_{max}/\beta$, the first regulator implements a first control of the electric current according to relations:

  - if $V_{measured} > (1 + \alpha/100) \times V_0$, then $I=0$;
  - if $V_{measured} < (1 - \alpha/100) \times V_0$ then $I$ is increased by $I_{max}/\beta$;
  - if $(1 - \alpha/100) \times V_0 \leq V_{measured} \leq (1 + \alpha/100) \times V_0$, then $I$ is kept,

- when current $I$ is greater than $I_{max}/\beta$, the first regulator implements a second control of the electric current according to relations:

  - if $V_{measured} > (1 + \delta/100) \times V_0$ then $I$ is decreased by $\gamma$%
  - if $1 + \delta/100) \times V_0 \geq V_{measured} > (1 + \alpha/100) \times V_0$ then $I$ is decreased by $\sigma$%;
  - if $V_{measured} < (1 - \delta/100) \times V_0$ then $I$ is increased by $\gamma$%;
  - if $(1 - \alpha/100) \times V_0 \leq V_{measured} < (1 - \delta/100) \times V_0$ then $I$ is increased by $\sigma$%
  - if $(1 - \alpha/100) \times V_0 \leq V_{measured} \leq (1 + \alpha/100) \times V_0$, then $I$ is kept,

  in which expressions $I_{max}$ is the maximum intensity that may flow through the stack, $\beta$ is a predetermined positive parameter, and $\alpha$, $\delta$, $\sigma$, and $\gamma$ are predetermined positive parameters, with $\delta > \alpha$ and $\gamma > \sigma$.

**14.** The electrochemical system of any of the foregoing claims, ***characterized* in that** the second regulator implements a gas flow rate control according to relations :

  - if $\tau_{measured} > (1 + \rho/100) \times \tau_0$ then $D_G$ is increased by $\rho$%
  - if $(1 + \rho/100) \times \tau_0 \geq \tau_{measured} > (1 + \varepsilon/100) \times \tau_0$ then $D_G$ is increased by $\varepsilon$%;
  - if $\tau_{measured} < (1 - \rho/100) \times \tau_0$ then $D_G$ is decreased by $\rho$%;
  - if $(1 - \varepsilon/100) \times \tau_0 > \tau_{measured} \geq (1 - \rho/100) \times \tau_0$ then $D_G$ is decreased by $\varepsilon$%; and
  - if $(1 - \varepsilon/100) \times \tau_0 \leq \tau_{measured} \leq (1 + \varepsilon/100) \times \tau_0$, then $D_G$ is kept,

  in which expressions $\varepsilon$ and $\rho$ are predetermined positive parameters, with $\rho > \varepsilon$.

**15.** The electrochemical system of any of claims 1 to 13, ***characterized* in that** the second regulator further implements a control according to relations:

  - if $\tau_{measured} > (1 + \varepsilon/100) \times \tau_0$ then $D_G$ is increased by $\varepsilon$%;
  - if $\tau_{measured} < (1 - \varepsilon/100) \times \tau_0$ then $D_G$ is decreased by $\varepsilon$%; and
  - if $(1 - \varepsilon/100) \times \tau_0 \leq \tau_{measured} \leq (1 + \varepsilon/100) \times \tau_0$, then $D_G$ is kept,

  in which expressions $\varepsilon$ is a predetermined positive parameter.

10

$$O^{2-} \rightarrow 1/2\ O_2 + 2e\text{-}$$

$O_2$

$e^-$

I

$\uparrow$ $\uparrow$ $O^{2-}$ $\uparrow$ $\uparrow$

14

16 **Fig. 1**

12

$e^-$

$H_2O$ $H_2$

$$H_2O + 2e^- \rightarrow H_2 + O^{2-}$$

20

30

18 26

$H_2$
$O_2$

$\uparrow$ $\uparrow$ $O^{2-}$ $\uparrow$ $\uparrow$

10

18

$H_2$
$O_2$

$\uparrow$ $\uparrow$ $O^{2-}$ $\uparrow$ $\uparrow$

10

$I^C$

18

$H_2$
$O_2$

I

$D^C_{H_2O}$

18

$H_2$
$O_2$

28

$H_2O$

24

$H_2$
$O_2$

$V_{mesure}$

34

$\uparrow$ $\uparrow$ $O^{2-}$ $\uparrow$ $\uparrow$

10

18

$H_2$
$O_2$

22

$\uparrow$ $\uparrow$ $O^{2-}$ $\uparrow$ $\uparrow$

10

18

$H_2$
$O_2$

**Fig. 2**

32

10

$$1/2\ O_2 + 2e^- \rightarrow O^{2-}$$

$O_2$

e⁻ →

C

30

14

16

$O^{2-}$

12

e⁻ ←

$H_2$            $H_2O$

$H_2 + O^{2-} \rightarrow H_2O + 2e^-$

**Fig. 3**

50    56

62

$V_0$    +  −

$K_V$    $I^C$

52

$SC_{mesure}$

SC

66

$SC_0$    +  −

$K_{SC}$

$D^C_{H_2O}$

EVHT

$V_{mesure}$

54    64    58    60

20,22,24,26,28,30,32,34

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011110676 A
- US 20050048334 A

**Littérature non-brevet citée dans la description**

- **K.R COOPER ; M. SMITH.** Electrical test methods for on-line fuel cell ohmic résistance measurement. *Journal Of Power Sources,* 2006, vol. 160, 1088-1095